# EUROPEAN PATENT SPECIFICATION

(11) **EP 2 432 739 B1**
(45) Date of publication and mention of the grant of the patent: **01.03.2017**
(21) Application number: 10719522.4
(22) Date of filing: 14.05.2010
(51) Int. Cl.: C02F 1/76, A01N 37/30, A01N 37/34, C02F 1/44, C02F 1/42

(54) **Controlling biofilm with 2,2-dibromomalonamide as biocide**
Biofilmbekämpfung mit 2,2-dibromomalonamide als Biozid
Contrôler du biofilm avec du 2,2-dibromo-malonamide comme biocide

(30) Priority: 18.05.2009 US 179161 P
(43) Date of publication of application: 28.03.2012
(73) Proprietor: Dow Global Technologies LLC, Midland, MI 48674 (US)
(72) Inventor: YIN, Bei, Buffalo Grove IL 60089 (US); GARTNER, Charles, D., Midland MI 48642 (US); RAJAN, Janardhans, S., Glenview IL 60026 (US); GANGULY, Sangeeta, Chicago IL 60611 (US); ROSENBURG, Steven, Shorewood MN 55331 (US); JONS, Steven, D., Eden Prairie MN 55346 (US)
(74) Representative: Beck Greener
(86) International application number: PCT/US2010/034939
(87) International publication number: WO 2010/135195

(56) References cited:
- WO-A1-2008/091453
- US-A- 4 232 041
- US-A1- 2002 128 311
- KIM B R ET AL: "Literature review-efficacy of various disinfectants against Legionella in water systems" WATER RESEARCH, ELSEVIER, AMSTERDAM, NL LNKD- DOI:10.1016/S0043-1354(02)00188-4, vol. 36, no. 18, 1 November 2002 (2002-11-01), pages 4433-4444, XP004380727 ISSN: 0043-1354
- MICHAEL TAYLOR ET AL: "Legionella, Protozoa, and Biofilms: Interactions Within Complex Microbial Systems" MICROBIAL ECOLOGY, SPRINGER VERLAG, NEW YORK, NY, US, vol. 58, no. 3, 1 January 2009 (2009-01-01), pages 538-547, XP009137897 ISSN: 0095-3628

## Description

### Cross-reference to Related Applications

This application claims the benefit of U.S. Provisional Application Ser. No. 61/179,161, filed May 18, 2009.

### Field of the Invention

The invention relates to methods for controlling biofilm in an aqueous or moisture-containing system by treating the system with 2,2-dibromomalonamide.

### Background of the Invention

Biofilms grow in almost any environment where there is a combination of microorganisms, moisture, nutrients, and a surface. In industry, biofilms occur in water-based processes, including water treatment and distribution. Biofilm formed by microorganism growth causes huge economic losses in industry through equipment and pipeline corrosion, system plugging, product failing, and energy losses. Biofilm is formed by a buildup of layers of microorganisms occupying a structured community encapsulated within a self developed polymeric matrix. Microorganisms within the biofilm are known as sessile microorganisms, whereas free floating non-biofilm microorganisms are planktonic.

By growing in biofilms, sessile microorganisms are more tolerant to antimicrobial treatment. 2,2-Dibromo-3-nitrilopropionamide ("DBNPA"), for example, is a commercially available biocide that is very effective at killing planktonic microorganisms; however, it is not as effective when used for biofilm treatment, primarily because of its quick hydrolysis and consequently short contact time with the sessile bacteria inside the biofilm.

Biocides that exhibit efficacy against biofilm-associated microorganisms are not necessarily efficient at removing a biofilm from a contaminated surface. The physical presence of the remnants of the biofilm (e.g., exopolysaccharides and dead bacteria cells) still lead to an uneven availability of oxygen to the metal surface that allows corrosion to occur. Thus, killing microorganisms in a biofilm without removing the biofilm from a surface may not always solve the corrosion problem.

It would be a significant advance in the industry to provide a biocide with high effectiveness against both planktonic and sessile cells, and has high capability of removing biofilm from a contaminated surface.

WO 2008/091453 discloses a method of treating water for municipal use comprising treating the feedwater stream on the feed side of a reverse osmosis membrane with a non-oxidizing, bromine-containing biocide in the substantial absence of a reducing agent, such that biofouling of the membrane is reduced or prevented, and measuring the produced water stream on the permeate side for the presence of bromine-containing compounds.

### BRIEF SUMMARY OF THE INVENTION

The invention provides a method for controlling biofilm in an aqueous or moisture-containing system. The method comprises adding from 10 ppm to 1,000 ppm by weight 2,2-dibromomalonamide to the aqueous or moisture containing-system.

### BRIEF DESCRIPTION OF THE DRAWINGS

Fig. 1 is a bar graph showing reduction of viable sessile bacteria after biocide treatment for different time intervals.
Fig. 2 is a bar graph showing effectiveness of biocides at removing biofilm.

### DETAILED DESCRIPTION OF THE INVENTION

As noted above, the invention relates to methods for controlling biofilm in aqueous or moisture-containing systems. The method comprises adding from 10 ppm to 1,000 ppm by weight 2,2-dibromomalonamide to the aqueous or moisture system. The inventors have surprisingly discovered that 2,2-dibromomalonamide is effective at controlling sessile cells. In addition, 2,2-dibromomalonamide is also effective at removing already formed biofilms in aqueous or moisture systems, such as from equipment surfaces operating in the system.

The term "2,2-dibromomalonamide" means a compound of the following formula: 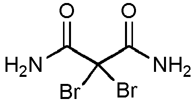 2,2-dibromomalonamide can be prepared by those skilled in the art using well known literature techniques.

In addition to its overall effectiveness against biofilms, 2,2-dibromomalonamide is also surprisingly more resistant to hydrolysis at near-neutral-to-alkaline pH than other biocides. For instance, the Examples below demonstrate that at pH 6.9, 2,2-dibromomalonamide (DBMAL) is remarkably more stable than DBNPA (a comparative biocide). No loss of DBMAL is detected over 96 hours whereas 84% the DBNPA is lost in this same time frame at identical conditions.

Thus, in a further embodiment, 2,2-dibromomalonamide is used in a method for controlling biofilm in an aqueous or moisture-containing system, wherein the aqueous or moisture containing component has a pH of 5 or greater. In some embodiments, the pH is 6 or greater. In further embodiments, the pH is 7 or greater. In still further embodiments, the pH is 8 or greater.

Aqueous or moisture-containing systems that may be treated with 2,2-dibromomalonamide include, but are not limited to, pulp and paper manufactory, cooling tower operation, heat exchangers, metalworking fluids, reverse osmosis water processing, oil and gas field injection, fracturing, and produced water, oil and gas wells and reservoirs, deaeration tower, oil and gas operation and transportation systems, oil and gas separation system and storage tanks, oil and gas pipelines, gas vessels, toilet bowls, swimming pools, household drains, household surfaces, process equipments, sewage systems, wastewater and treatment systems, other industrial process water, boiler system, ballast water, and equipments, pipes, tubes, and other surfaces in these systems. Preferred aqueous or moisture systems are paper and pulp manufactory, cooling tower operation, reverse osmosis water processing, oil and gas field operation, separation, transportation, and storage systems, pipelines, gas vessels, metal working fluids and membrane-based filtration systems.

Representative membrane-based filtration systems include those comprising one or more semi-permeable membranes, including but not limited to: micro filtration, ultrafiltration, nanofiltration, reverse osmosis and ion-exchange membranes. Applicable systems include those comprising a single type of membrane (e.g. microfiltration) and those comprising multiple types of membranes (e.g. ultrafiltration and reverse osmosis). For example, a membrane-based filtration system may comprise an upstream microfiltration or ultrafiltration membrane and a downstream nanofiltration or reverse osmosis membrane.

2,2-dibromomalonamide may be added to a feed solution prior to filtration, (e.g. added to a storage tank or pond containing feed solution to be treated) or during filtration, (e.g. dosed into a pressurized feed solution during filtration). Moreover, 2,2-dibromomalonamide may be added to cleaning or storage solutions which contact the membrane. For purposes of this description, any aqueous solution (e.g. raw feed water, cleaning solution, membrane storage solution, etc.) contacting a membrane of a system is referred to as a "feed solution."

When used within a system having both micro or ultrafiltration and nanofiltration or reverse osmosis membranes, the 2,2-dibromomalonamide provides biocidal effect to each membrane (e.g. both upstream and downstream membranes).

The portion of 2,2-dibromomalonamide rejected by a membrane(s) may be recovered from the concentrate stream and recycled for use in subsequent treatments, (e.g. directed back to a storage tank or dosed within incoming feed). The recycle of 2,2-dibromomalonamide may be part of an intermittent or continuous process.

In many membrane-based filtration systems, the pH of the feed solution is at least 7, often at least 8, in some embodiments at least 9, and in other embodiments at least 10. Examples of such membrane-based systems are described US 6,537,456 and US 7,442,309. Moreover, membranes of many systems are commonly cleaned or stored with feed solutions having pH values of at least 11 and in some embodiments at least 12. Unlike DBNPA (as described in WO 2008/091453), 2,2-dibromomalonamide remains effective under such neutral and alkaline conditions. As a consequence, the 2,2-dibromomalonamide may be added to a wider breath of feed solutions (e.g. pH adjusted aqueous feeds, aqueous cleaning solutions, aqueous storage solutions) used in connection with membrane-based filtration systems.

The type of membranes used in such systems are not particularly limited and include flat sheet, tubular and hollow fiber. One preferred class of membranes include thin-film composite polyamide membranes commonly used in nanofiltration and reverse osmosis applications, as generally described in US 4,277,344; US 2007/0251883; and US 2008/0185332. Such nanofiltration and/or reverse osmosis membranes are commonly provided as flat sheets within a spiral wound configuration. Non-limiting examples of microfiltration and ultrafiltration membranes include porous membranes made from a variety of materials including polysulfones, polyethersulfones, polyamides, polypropylene and polyvinylidene fluoride. Such micro and ultrafiltration membranes are commonly provided as hollow fibers.

The 2,2-dibromomalonamide is added to the the aqueous or moisture-containing system in an amount of from 10 ppm to 1,000 ppm. An amount of at least 50 ppm, is generally adequate. In some embodiments, the amount is 500 ppm or less or 300 ppm or less, or 200 ppm or less, or 100 ppm or less. In further embodiments, the amount is between about 20 and about 30 ppm.

The 2,2-dibromomalonamide can be used in the aqueous or moisture-containing system with other additives such as, but not limited to, surfactants, ionic/nonionic polymers and scale and corrosion inhibitors, oxygen scavengers, and/or additional biocides.

The 2,2-dibromomalonamide is are useful for controlling a wide variety of microorganisms. In one embodiment, the microorganism are the *Legionella* species of bacteria, including such bacteria whose numbers are amplified by passage through amoeba.

*Legionella* bacteria have been implicated as the cause of Legionnaires' disease and Pontiac fever, collectively known as legionellosis. Many outbreaks of legionellosis have been attributed to evaporative cooling systems providing infectious doses. *Legionella* exhibit the relatively unique survival ability of parasitizing and residing within amoeba, eventually lysing their host cells to emerge as mature infectious forms. This mechanism has been suggested as the major means of amplification of *Legionella* numbers in natural and man made water systems and their increased virulence. A biocide that can effectively control *Legionella,* including forms of *Legionella* rendered more virulent by passage through amoeba, is highly desirable. As demonstrated by the examples, 2,2-dibromomalonamideis effective for this such bacterial control.

The 2,2-dibromomalonamide is surprisingly effective at controlling sessile/biofilm microorganisms than other biocides, including the commercial compound DBNPA, and therefore represent a significant advance to the industry.

For the purposes of this specification, the words "control" and "controlling" should be broadly construed to include within their meaning, and without being limited thereto, inhibiting the growth or propagation of sessile microorganisms, killing sessile microorganisms, disinfection, and/or preservation. "Control" and "controlling" also encompass the partial or complete removal of the sessile microorganisms' biofilm from a surface to which it is at least partially attached.

By "hydroxyalkyl" is meant an alkyl group (i.e., a straight and branched chain aliphatic group) that contains 1 to 6 carbon atoms and is substituted with a hydroxyl group. Examples include, but are not limited to, hydroxymethyl, hydroxyethyl, 2-hydroxypropyl, 3-hydroxypropyl, and the like.

"Halogen" refers to fluoro, chloro, bromo, or iodo.

Unless otherwise indicated, ratios, percentages, parts, and the like used herein are by weight.

The following examples are illustrative of the invention but are not intended to limit its scope.

### EXAMPLES

The following compositions are evaluated in the Examples:
2,2-Dibromo-3-nitrilopropionamide ("DBNPA") is obtained from The Dow Chemical Company.
2,2-Dibromomalonamide ("DBMAL") is obtained from Johnson Mathey.
Glutaraldehyde is obtained from The Dow Chemical Company.
CMIT/MIT (5-chloro-2-methyl-4-isothiazolin-3-one and 2-methyl-4-isothiazolin-3-one) is obtained from The Dow Chemical Company.
Dioctyl dimethyl ammonium chloride is obtained from Lonza Inc.

### Reference Example 1

### Preparation of 2,2-Dibromo-2-cyano-N-(3-hydroxypropyl)acetamide (DBCHA)

0.1 mole of 3-amino-1-propanol (7.51 grams) is added to a solution of 0.1 moles methyl cyanoacetate (10.1 grams) in methanol (40 grams). The mixture is stirred and heated to 60 °C for 30 minutes. The methanol solvent is vacuum stripped from the reaction product. The reaction product, without any further purification necessary, is dissolved in water and reacted with 0.1 mole of bromine (16.0 grams) and 0.03 mole of sodium bromate (5.0 grams), The reaction temperature is kept below 30 °C. After the bromine and sodium bromate addition is complete the reaction mixture is allowed to stir for 30 minutes before neutralizing to pH 3 to 4 with dilute sodium hydroxide. Yield is 0.09 mole of 2,2-dibromo-2-cyano-N-(3-hydroxypropyl)acetamide (28 grams).

### Example 2

### Stability Against Hydrolysis: Comparison of DBMAL and DBNPA

Dilute solutions (less than 0.5 wt%) of DBMAL and DBNPA are prepared at three different pHs. The pH is set and maintained, by using standard buffer solutions, at pH 6.9, 8.0 and 9.0. These solutions are then held at constant temperature at either -1 °C or 30 °C. Periodically, aliquots are analyzed by HPLC to determine the level of DBMAL or DBNPA remaining. Results are shown in Table 1.

**Table 1.**

| | **Three DBNPA Samples** | | | **Three DBMAL Samples** | | |
|---|---|---|---|---|---|---|
| Hours | pH 9, T=-1C | pH 8, T=-1C | pH 6.9, T=30C | pH 9, T=-1C | pH 8, T=-1C | pH 6.9, T=30C |
| 0 | 3842 | 4068 | 3991 | 4576 | 3866 | 3746 |
| 2 | 2818 | 3998 | 4155 | 4022 | 4031 | 4612 |
| 24 | 1256 | 3506 | 2557 | 3891 | 4191 | 3857 |
| 48 | 659 | 3578 | 1361 | 3603 | 4187 | 3935 |
| 72 | 363 | 3149 | 918 | 4018 | 4290 | 3966 |
| 96 | 239 | 3070 | 658 | 3456 | 3883 | 4212 |

| Hours | **Calculated Percent Reduction of the Active Ingredient at Various Times** | | | | | |
|---|---|---|---|---|---|---|
| 48 | 83 | 12 | 66 | 21 | 0 | 0 |
| 72 | 91 | 23 | 77 | 12 | 0 | 0 |
| 96 | 94 | 25 | 84 | 24 | 0 | 0 |

Table 1 shows that even at near-neutral conditions (pH = 6.9) and a temperature of 30 °C, DBMAL is remarkably more stable than DBNPA (a comparative biocide). No loss of DBMAL is detected over 96 hours whereas 84% the DBNPA is lost in this same time frame at identical conditions.

### Example 3

### Efficacy against biofilm associated bacteria

Biofilms of *P. aeruginosa* ATCC 10145 are grown in Calgary biofilm devices (Innovotech, Alberta, Canada) for 42 hours. Trypticase Soy Broth (TSB) is used in the biofilm devices as the culture medium. After the incubation period, loosely associated cells are removed from the biofilms that develop on the surfaces of the submerged pegs by rinsing with sterile 0.85% NaCl. The biofilms are than treated with DBMAL (inventive biocide), glutaraldehyde (comparative biocide), or DBNPA (comparative biocide). A dilute salts solution is used as the test medium for the efficacy studies. The salts solution contains (in grams per liter of deionized water) CaCl₂, 0.2203 g; MgSO₄, 0.1847 g; and NaHCO₃, 0.2033 g. The final pH of the solution is adjusted to 8.5.

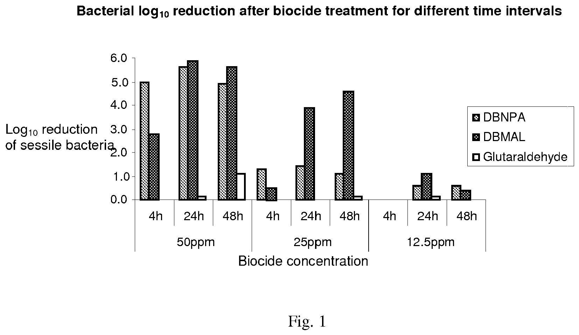

The concentrations of each active tested are 100 ppm, 50 ppm, 25 ppm, 12.5 ppm in the salts solution and the contact times are for 4 hours, 24 hours and 48 hours, respectively. In all cases, the incubation temperature is 37 °C. Sterile deionized water is used as a non-biocide treated control. After each contact time, the pegs are washed with sterile 0.85% NaCl and the bacteria are released from the biofilm on the surface of each peg into sterile 0.85% NaCl by sonication (see Ceri et al., Journal of Clinical Microbiology 1999, 37: 1771-1776). The viable bacteria are then enumerated in TSB, using a serial dilution method. The data comparing DBMAL with DBNPA and glutaraldehyde is provided in Fig. 1.

In general, DBMAL (inventive biocide) is more effective than DBNPA (comparative biocide) against sessile bacteria. Glutaraldehyde only shows low effectiveness at 50 ppm active concentration after the 48 h treatment. At an active concentration of 25 ppm, DBMAL is a very effective biocide and its efficacy increases with contact time.

### Example 4

### Biofilm removal evaluation

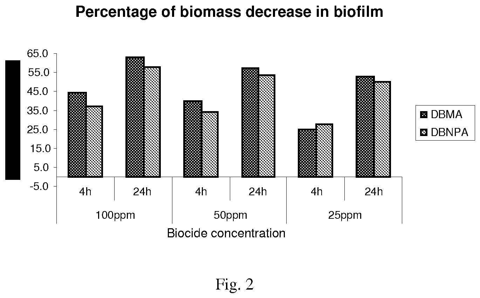

The Calgary biofilm device is used to prepare biofilms of *P. aeruginosa* ATCC 10145. TSB is used as the culture medium and biofilms are allowed to develop over a period of 42 hours. The pegs with biofilm growing on the surface are then washed with sterile 0.85% NaCl and then treated with DBMAL (inventive biocide) or DBNPA (comparative biocide). Concentrations of the actives tested are 25 ppm, 50 ppm, 100 ppm in sterile diluted salts solution as the test medium. The treatment is conducted at 37 °C for 4 hr and 24 hr, respectively. Sterile deionized water is used as an untreated control. After treatment, the pegs are washed with sterile 0.85% NaCl and then the biomass/biofilm on each peg is measured (see Stepanovic et al., Journal of Microbiological Methods, 2000, 40, 175-179). First the biofilm is fixed with 99% methanol and, after air drying, the pegs are stained with 2% (w/v) crystal violet and washed with tap water. The pegs are then air dried and the crystal violet bound to the biofilm is extracted with 33% glacial acetic acid. The optical density (OD) of the extracted solution is measured at 580 nm. The results are depicted in Fig. 2.

As can be seen from the data, DBMAL (inventive biocide) exhibits overall better biofilm removal than DBNPA (comparative biocide). The efficacy of biofilm removal improves with longer time for both materials (24 h comparing to 4 h).

### Example 5

### Control of Amoeba amplified Legionella

Since *Legionella* are amplified in natural and man made systems, such as cooling towers, by passage through amoeba, eradication of such amoeba fed *Legionella* forms, is more important and relevant. This example uses amoeba fed *Legionella pneumophila* (AfLp) in evaluating suitable biocides.

The *Legionella* are allowed to infect and grow inside amoeba (*Acanthamoeba polyphaga*) starting with a low multiplicity of infection (1 *Legionella* to 100 amoeba cells). Such a passage is repeated one more time allowing for establishment of the more virulent form as their dominant physiology, prior to exposure to various concentrations of biocides. The evaluations are conducted after two and twenty four hours of exposure. Appropriate neutralization of the biocides is carried out prior to enumeration of survivors. Table 6 below compares effectiveness of various biocides against both AfLp and free normally grown *Legionella* cells.

**Table 2**

| Biocides | Active concentration (ppm) required for complete kill (6 log reduction) | | | |
|---|---|---|---|---|
| | Free *Legionella* | | Amoeba fed *Legionella* | |
| | 2 hours | 24 hours | 2 hours | 24 hours |
| DBNPA | 12.5 | 3.12 | 50 | 25 |
| DBMAL | 6.25 | 1.56 | 12.5 | 3.12 |
| CMIT | 16 | 1 | >64 | 16 |
| Glutaraldehyde | 10 | 5 | 20 | 15 |
| Glutaraldehyde + DDAC | 2.5 | 1.25 | 20 | 10 |
| DDAC | 20 | 15 | 60 | 40 |

| | | | | |
|---|---|---|---|---|
| DDAC = didecyl dimethyl ammonium chloride | | | | |

The data shows that for every biocide tested the amount needed to kill AfLp is greater than the amounts needed to kill free *Legionella.* However the amounts of DBMAL required for *Legionella* control is much lower than those needed for other tested biocides, including DBNPA. This is an unexpected and surprising finding. The levels of DBMAL needed for providing 6 log kills are only about twice that needed for controlling free cells at the corresponding time points. DBMAL provides a means of controlling the more virulent form of AfLp at low dosages when compared to other commonly used biocides.

While the invention has been described above according to its preferred embodiments, it can be modified within the scope of this disclosure. This application is therefore intended to cover any variations, uses, or adaptations of the invention using the general principles disclosed herein. Further, the application is intended to cover such departures from the present disclosure as come within the known or customary practice in the art to which this invention pertains and which fall within the limits of the following claims.

## Claims

1. A method for controlling biofilm in an aqueous or moisture-containing system, the method comprising adding from 10 ppm to 1,000 ppm by weight 2,2-dibromomalonamide to the aqueous or moisture-containing system.

2. A method according to claim 1 wherein the aqueous or moisture-containing system has a pH of 5 or greater.

3. A method according to claims 1-2 wherein the aqueous or moisture-containing system is: pulp and paper manufactory, cooling tower operation, heat exchangers, metalworking fluids, reverse osmosis water processing, oil and gas field injection, fracturing, and produced water, oil and gas wells and reservoirs, deaeration tower, oil and gas operation and transportation systems, oil and gas separation system and storage tanks, oil and gas pipelines, gas vessels, toilet bowls, swimming pools, household drains, household surfaces, process equipments, sewage systems, wastewater and treatment systems, other industrial process water, boiler system, ballast water, and equipments, pipes, tubes, and other surfaces in these systems.

4. A method according to any one of claims 1-3 wherein the bacteria is species of the genus *Legionella.*

5. A method according to any one of claims 1-4 wherein the bacteria is a species *Legionella* that has reproduced inside living amoeba.

6. A method according to claims 1-5 wherein the system comprises a membrane-based filtration system comprising at least one semi-permeable membrane selected from at least one of: microfiltration, ultrafiltration, nanofiltration, reverse osmosis and ion exchange membranes; wherein the method comprises adding 2,2-dibromomalonamide to a feed solution followed by contacting the feed solution with the semi-permeable membrane.

7. A method according to claims 1-6 wherein the membrane-based filtration system comprises at least: i) one microfiltration or ultrafiltration membrane and ii) at least one nanofiltration or reverse osmosis membrane.

8. A method according to claims 1-7 wherein the feed solution has a pH of at least 9.

9. A method according to claims 1-8 wherein the feed solution has a pH of at least 11.

## Patentansprüche

1. Ein Verfahren zum Bekämpfen von Biofilm in einem wässrigen oder Feuchtigkeit enthaltenden System, wobei das Verfahren das Zugeben von 10 Gewichts-ppm bis 1000 Gewichts-ppm 2,2-Dibrommalonamid zu dem wässrigen oder Feuchtigkeit enthaltenden System beinhaltet.

2. Verfahren gemäß Anspruch 1, wobei das wässrige oder Feuchtigkeit enthaltende System einen pH-Wert von 5 oder mehr aufweist.

3. Verfahren gemäß den Ansprüchen 1-2, wobei das wässrige oder Feuchtigkeit enthaltende System Folgendes ist: Faserstoff- und Papierfabrik, Kühlturmbetrieb, Wärmeüberträger, Metallbearbeitungsfluide, Wasserverarbeitung durch Umkehrosmose, Öl- und Gasfeldinjektions-, Fracking- und Förderwasser, Öl- und Gasquellen und -reservoirs, Entlüftungsturm, Öl- und Gasbetriebs- und -transportsysteme, Öl- und Gastrennungssystem und -lagertanks, Öl- und Gaspipelines, Gasbehälter, Toilettenschüsseln, Schwimmbecken, Haushaltsabflüsse, Haushaltsoberflächen, Prozessausrüstungen, Abwassersysteme, Schmutzwasser- und Behandlungssysteme, anderes industrielles Prozesswasser, Boilersystem, Ballastwasser und Ausrüstungen, Rohre, Röhren und andere Oberflächen in diesen Systemen.

4. Verfahren gemäß einem der Ansprüche 1-3, wobei die Bakterien eine Spezies der Gattung *Legionella* sind.

5. Verfahren gemäß einem der Ansprüche 1-4, wobei die Bakterien eine *Legionella-*Spezies ist, die sich innerhalb einer lebenden Amöbe reproduziert hat.

6. Verfahren gemäß den Ansprüchen 1-5, wobei das System ein membranbasiertes Filtrationssystem beinhaltet, das mindestens eine halbdurchlässige Membran beinhaltet, ausgewählt aus mindestens einem von Folgendem: Mikrofiltration, Ultrafiltration, Nanofiltration, Umkehrosmose- und Ionenaustauschmembranen; wobei das Verfahren das Zugeben von 2,2-Dibrommalonamid zu einer Zufuhrlösung beinhaltet, gefolgt von dem In-Kontakt-Bringen der Zufuhrlösung mit der halbdurchlässigen Membran.

7. Verfahren gemäß den Ansprüchen 1-6, wobei das membranbasierte Filtrationssystem mindestens Folgendes beinhaltet: i) eine Membran zur Mikrofiltration oder Ultrafiltration und ii) mindestens eine Membran zur Nanofiltration oder Umkehrosmose.

8. Verfahren gemäß den Ansprüchen 1-7, wobei die Zufuhrlösung einen pH-Wert von mindestens 9 aufweist.

9. Verfahren gemäß den Ansprüchen 1-8, wobei die Zufuhrlösung einen pH-Wert von mindestens 11 aufweist.

## Revendications

1. Une méthode pour contrôler un biofilm dans un système aqueux ou contenant de l'humidité, la méthode comprenant l'ajout de 10 ppm à 1 000 ppm en poids de 2,2-dibromomalonamide au système aqueux ou contenant de l'humidité.

2. Une méthode selon la revendication 1 dans laquelle le système aqueux ou contenant de l'humidité a un pH de 5 ou plus.

3. Une méthode selon les revendications 1 à 2 dans laquelle le système aqueux ou contenant de l'humidité est : une fabrique de papier et de pâte à papier, le fonctionnement d'une tour de refroidissement, des échangeurs de chaleur, des fluides d'usinage des métaux, une épuration des eaux par osmose inverse, de l'eau de production, de fracturation et d'injection pour champ de pétrole et de gaz, des gisements et des puits de pétrole et de gaz, une tour de désaération, des systèmes de transport et d'exploitation de pétrole et de gaz, des réservoirs de stockage et de système de séparation de pétrole et de gaz, des pipelines de pétrole et de gaz, des navires gaziers, des cuvettes de toilette, des piscines, des tuyaux d'évacuation de la maison, des surfaces de la maison, des matériaux de traitement, des systèmes d'égout, des systèmes d'eaux usées et de traitement, d'autres eaux industrielles, un système de chaudière, de l'eau de ballast, et des équipements, des tuyaux, des tubes, et d'autres surfaces dans ces systèmes.

4. Une méthode selon n'importe laquelle des revendications 1 à 3 dans laquelle la bactérie est une espèce du genre *Legionella.*

5. Une méthode selon n'importe laquelle des revendications 1 à 4 dans laquelle la bactérie est une espèce *Legionella* qui s'est reproduite au sein d'une amine vivante.

6. Une méthode selon les revendications 1 à 5 dans laquelle le système comprend un système de filtration membranaire comprenant au moins une membrane semi-perméable sélectionnée parmi au moins un élément d'entre : des membranes de microfiltration, d'ultrafiltration, de nanofiltration, d'osmose inverse et échangeuses d'ions ; dans laquelle la méthode comprend l'ajout de 2,2-dibromomalonamide à une solution d'alimentation suivi par la mise en contact de la solution d'alimentation avec la membrane semi-perméable.

7. Une méthode selon les revendications 1 à 6 dans laquelle le système de filtration membranaire comprend au moins : i) une membrane de microfiltration ou d'ultrafiltration et ii) au moins une membrane de nanofiltration ou d'osmose inverse.

8. Une méthode selon les revendications 1 à 7 dans laquelle la solution d'alimentation a un pH d'au moins 9.

9. Une méthode selon les revendications 1 à 8 dans laquelle la solution d'alimentation a un pH d'au moins 11.
